# EUROPEAN PATENT SPECIFICATION

(11) **EP 2 685 156 B1**
(45) Date of publication and mention of the grant of the patent: **11.11.2020**
(21) Application number: 12176267.8
(22) Date of filing: 13.07.2012
(51) Int. Cl.: F21V 8/00, G02F 1/13357

(54) **Backlight module**
Rückbeleuchtungsmodul
Module de rétroéclairage

(43) Date of publication of application: 15.01.2014
(73) Proprietor: BlackBerry Limited, Waterloo, ON N2K 0A7 (CA)
(72) Inventor: Lee, Hsin Chin, Waterloo, Ontario N2L 3W8 (CA); Purdy, Michael Lorne, Waterloo, Ontario N2L 3W8 (CA); Lee, Choongho, Waterloo, Ontario N2L 3W8 (CA)
(74) Representative: MERH-IP Matias Erny Reichl Hoffmann Patentanwälte PartG mbB

(56) References cited:
- EP-A1- 1 341 030
- JP-A- 2002 098 960
- JP-A- 2004 199 882
- US-A- 6 044 196
- US-A1- 2009 303 414
- US-A1- 2011 032 727

## Description

The present disclosure relates to backlight modules for liquid crystal displays for illuminating display screens or keypads.

Backlight (BL) modules often are used in conjunction with liquid crystal displays (LCD) in electronic devices for the illumination of display screens, keypads, navigation devices, or other components. A backlight module and light source are used to illuminate a component such as an LCD display from behind the display in order to provide improved illumination of components under various light conditions. Poor backlight efficiency can affect the brightness of a display and impact power usage and battery life in the electronic device.

JP 2002 098960 A concerns a transflective display device capable of obtaining frontal luminance both in a reflective display and in a transmissive display. US 2011/0032727 A1 relates to backlight reflectors having a prismatic structure. JP 2004 199882 A concerns a surface illumination device and a liquid crystal display device. EP 1341030 A1 discloses a surface emitting lighting device for a liquid crystal display. US 6,044,196 is concerned with a luminaire device. US 2009/0303414 A1 relates to an optical member with a scatter layer, and a backlight assembly and display device having the same.

Embodiments of the present disclosure will now be described, by way of example only, with reference to the attached Figures, wherein:
Figure 1 is a schematic cutaway view of components of a backlight module according to an example embodiment;
Figures 2 and 3 show detailed views of prisms of the backlight module according to the example embodiment of Figure 1;
Figure 4 is a schematic cutaway view of components of a backlight module according to another example embodiment;
Figure 5 is a schematic cutaway view of components of a backlight module according to another example not according to the invention;
Figure 6 shows a detailed view of a prism of a backlight module according to the example illustrated in Figure 5;
Figure 7 is a schematic cutaway view of components of a backlight module according to another example not according to the invention;
Figure 8 is a schematic cutaway view of components of a backlight module according to another example embodiment;
Figure 9 illustrates a top view of a portion of a backlight module according to another example embodiment;
Figure 10(a) is a sample brightness distribution diagram when light is incident on a backlight module according to an example embodiment; Figures 10(b) and (c) illustrate, respectively, conoscopic plots for a conventional backlight module and a backlight module according to an example embodiments; and
Figure 11 is a simplified block diagram of components including internal components of an electronic device according to an example embodiment.

It will be appreciated that for simplicity and clarity of illustration, where considered appropriate, reference numerals may be repeated among the figures to indicate corresponding or analogous elements. In addition, numerous specific details are set forth in order to provide a thorough understanding of the example embodiments described herein. However, it will be understood by those of ordinary skill in the art that the example embodiments described herein may be practiced without these specific details. In other instances, well-known methods, procedures and components have not been described in detail so as not to obscure the example embodiments described herein. Also, the description is not to be considered as limited to the scope of the example embodiments described herein.

According to the invention there is provided a backlight module in accordance with annexed claim 1.

In some embodiments, the prism structure comprises a film, a top portion of the film including the plurality of prisms. In other embodiments, the prism structure is integrated into a top portion of the reflector.

In some embodiments, the backlight module further comprises an air gap between at least some regions of a top surface of the prism structure and the light guide bottom surface.

In some embodiments, apexes of some of the prisms contact the light guide bottom surface and apexes of some of the prisms are spaced apart from the light guide bottom surface.

In some embodiments, the backlight module further comprises at least one brightness enhancement film.

In some embodiments, the plurality of prisms comprises channels, across at least a portion of the prism structure, which are arranged at oblique angles to edges of the prism structure.

In some embodiments, the backlight module further comprises at least one light source arranged to supply light to the light guide and the prism structure is configured to change the angle of light reflected by the reflector to control the angle of light emitted from the top surface of the light guide. In some further embodiments, the prism structure is configured to change the angle of light reflected by the reflector to provide emitted light from the top surface of the light guide at an angle of 55 to 125 degrees.

In some embodiments, the prism structure comprises a film, a top portion of the film including the plurality of prisms. The film comprises acrylic resin material or polyethylene terephthalate (PET).

In some embodiments, the prism structure is integrated into a top portion of the reflector and prisms are formed in the reflector by creating depressions, notches or holes in the reflector.

In some embodiments, the prism structure has at least one spacer separating a top of the prism structure from the bottom surface of the light guide. The one or more spacers may be provided on outer edges of the prism structure, the spacers separating the light guide and the prism structure.

According to another embodiment there is provided an electronic device comprising a backlight module as described above. The electronic device further includes a light source arranged to supply light to the light guide.

In some embodiments, the electronic device further comprises a display or a keypad and the backlight module and light source provide backlighting for the display or for the keypad.

Backlight modules are commonly used in electronic devices to distribute light to a particular point or area. The backlight module may include a light source or it may be located adjacent to a light source in order to provide and distribute light for a display such as an LCD display. The backlight module may be mounted behind or below an LCD component. In some examples, the backlight module and light source provide backlighting for one or more keys, navigation devices or other input devices. In some examples, the backlight module and light source provide light to illuminate portions of a device bezel or any other component of the device. In some examples, the backlight module and light source may provide light to be emitted from an aperture of the device. In some examples, the light guide may distribute light for any combination of uses. The angle of light emitted from a backlight module affects the brightness of the display element as light emitted at wide angles typically is not received by a user facing the display element. In some embodiments, light output an angle of 90 degrees, +/- 35 degrees, from a front surface of the backlight module and display element provides improved brightness of the display element for a user.

Embodiments of the present disclosure may be applied to any backlight module with a light guide and a reflector. Embodiments of the present disclosure may be applied to electronic devices including but not limited to mobile phones, tablet or laptop computers, personal media players, gaming devices, imaging devices, e-readers and GPS devices. Embodiments of the present disclosure also may be applied to devices such as televisions, monitors, signs, dashboards, control panels, or keyboards. The present disclosure may be applied to any other backlight application and is not necessarily limited to the examples described herein.

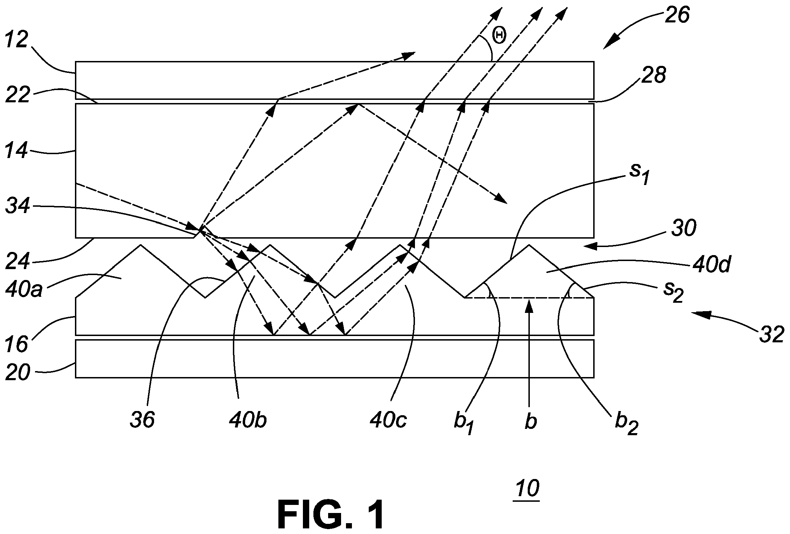

Figure 1 illustrates a backlight module 10, such as a backlight module for a liquid crystal display (LCD), also referred to herein as a BL module or LCD BL module, according to one embodiment of the present disclosure. The BL module 10 is comprised of a number of layers or planar structures. In one embodiment, the BL module includes a diffuser 12, a light guide 14, a prism structure 16 and a reflector 20. The diffuser 12, the light guide 14, the prism structure 16 and the reflector 20 typically comprise planar structures, cross-sections of which are represented in Figure 1. The light guide 14 has a top surface 22 and a bottom surface 24. The top surface 22 of the light guide 14 is adjacent and below the diffuser 12. The prism structure 16 is positioned between the bottom surface 24 of the light guide 14 and the reflector 20.

The BL module 10 may include a frame, tape and other mechanical and electrical components (not shown) for assembling, mounting and connecting the BL module 10 to a circuit board or frame of an electronic device. The BL module 10 typically is located below a liquid crystal display (LCD) or other display elements (not shown) such that light emitted from the top 26 of the BL module 10 illuminates the display.

In one embodiment, the diffuser 12 comprises a film which internally reflects some incident light rays so that light exiting the diffuser 12 and BL module 10 is scattered and provides more uniform lighting for a display element. The light guide 14 comprises a layer of optical material, such as acrylic resin or plastic configured to diffuse light from a light source. The example light guide 14 in Figure 1 is illustrated as a plate or panel which, for example, may provide backlighting to a display. However, the example embodiments described in the present disclosure may be applied to any shape or type of light guide 14 including but not limited to wedge light guides. In some embodiments, the BL module 10 includes one or more light sources (not shown in Figure 1) or one or more light sources may be provided adjacent the BL module 10. In some embodiments, one or more light sources are provided adjacent a side of the light guide 14 to provide an edge-lit display.

In one embodiment, as light enters the light guide 14 from a light source adjacent the left side of the light guide 14, as illustrated in Figure 1, some light incident at the interface 28 between the light guide 14 and the upper part of the backlight module 10 is refracted and emitted from the top surface 22 of the light guide 14. Light is also propagated from the light source through the light guide 14 through total internal reflection (TIR) within the light guide 14 according to Snell's law and Fresnel's equations. Light incident at the interface 30 between the light guide 14 and a bottom portion 32 of the backlight module 10 also may be refracted and emitted from the bottom surface 24 of the light guide 14 or may be reflected within the light guide 14. In some embodiments, light is emitted from the light guide 14 towards the diffuser 12 and the top 26 or light-emitting side of the backlight module 10 as a result of a pattern of extraction points or elements in the top of the light guide 14, the bottom of the light guide 14, or in both the top and bottom of the light guide 14. An example extraction element 34 is represented in Figure 1.

As described above, light is also emitted or escapes from the bottom of the light guide 14. The reflector 20 is typically a flat layer provided below the light guide 14 to reflect or redirect light emitted from the bottom of the light guide 14 back towards the light guide 14 and to the top 26 of the backlight module 10. The reflector 20 may be comprised of a multi-layer plastic with a reflective film such as the 3M™ Enhanced Specular Reflector (ESR); a metal coating such as silver or aluminium on a polyethylene terephthalate (PET) substrate; or a white material such as TiO2 (titanium dioxide) or BaSO4 (barium sulfate), or other suitable material having a high refractive index.

According to the invention, the prism structure 16 is positioned between the light guide bottom surface 24 and the reflector 20. The prism structure 16 may be assembled with the light guide 14, the reflector 20 and other components of the backlight module 10 with a frame (not shown). In other embodiments, the prism structure 16 is laminated to the reflector 20 using an optically clear adhesive (OCA). The prism structure 16 comprises a film of an acrylic resin material or polyethylene terephthalate (PET) which allows light to pass through the prism structure 16. In one embodiment, the prism structure 16 has an index of refraction of 1.4 to 1.6. Light which passes through the prism structure 16 may be reflected by the reflector 20 and pass back through the prism structure 16 to the light guide 14. As light from the light guide 14 crosses the interface 36 at the prism structure 16, the light is refracted by the prism structure 16 and then reflected by the reflector 20. Light is again refracted as it passes through the prism structure 16 and interface 36 and as it passes the interface 30 and the light guide 14.

The prism structure 16 is configured to change the angle of light incident at the reflector 20 and the angle of light re-entering the light guide 14 in order to affect or control the angle of light *θ* emitted from the top surface 26 of the BL module 10. In one embodiment, the prism structure 16 is configured to increase the amount of light emitted from the top 26 of the BL module 10 at angles between 55 to 125 degrees, relative to the top surface of the BL module 10, in order to increase the brightness of a display element located above the BL module 10. By changing the angle of light re-entering the light guide 14 from the reflector 20, the prism structure 16 also reduces the amount of reflection and total internal reflection between the bottom surface 24 of the light guide 14 and the reflector 20. The sizes, angles and configurations of the prisms 38a,b,c,d may be varied depending on a number of factors including but not limited to the indexes of refraction of the light guide 14, the prism structure 16 and any material or substance between the light guide 14 and the prism structure 16, as well as the material of the prism structure 16, the reflector 20, the material and configuration of the light guide 14, and the pattern of extraction points or elements 34 in the light guide 14.

The prism structure 16 comprises a plurality of prisms 38a,b,c,d in a top portion of the structure 16 which extend upwardly towards the light guide 14. In one embodiment, the prisms 38a,b,c,d comprise strips or channels across at least a portion of the planar prism structure 16. In other embodiments, the structure 16 includes other shapes (not shown) configured to change and redirect the angles of light entering the bottom of the light guide 14. In some embodiments, an air gap is provided between the light guide 14 and the prism structure 16 or between the light guide 14 and at least a portion of the prism structure 16. Light is refracted as it travels through the interface between the light guide 14 and the air gap, and then again as it travel between the air gap and the interface 36 of the prism structure 16. In some embodiments, an air gap is provided between the prism structure 16 and the reflector 20.

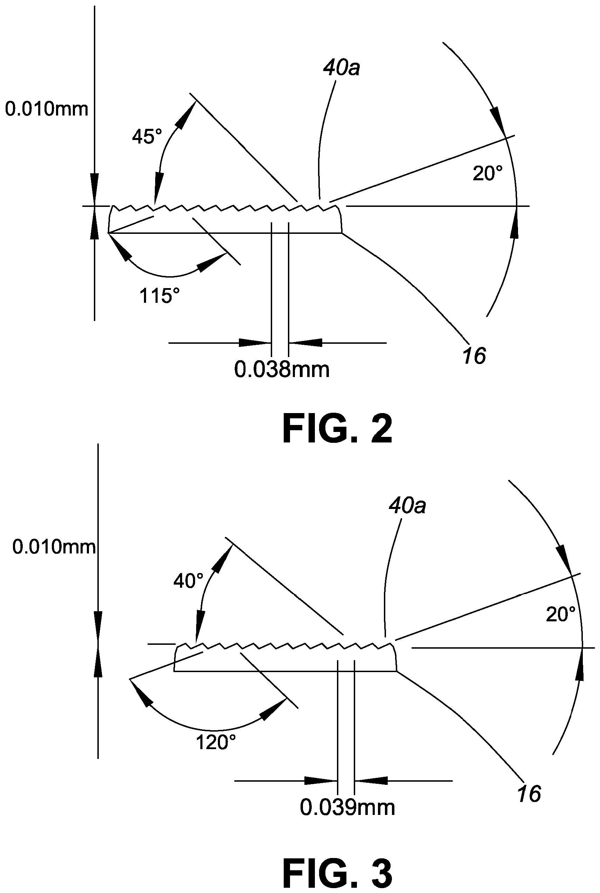

As illustrated in Figures 1, 2, and 3, the bases of the prisms 38a,b,c,d are triangular and are asymmetrically shaped such as oblique or scalene triangles. The apex angle a of the prisms 38a,b,c,d is larger than the base angles *b₁*, *b₂* and base angle *b₂* is 1.5 to 4 times larger than base angle *b₁*. The angles, size and pitch of the prisms 38a,b,c,d are configured depending on the material of the prism structure 16, the reflector 20 and the distance between the prism structure 16 and the light guide 14. In the embodiment shown in Figure 2, the prism 38a has a prism or apex angle of 115 degrees and base angles *b₁* and *b₂* of 20 degrees and 45 degrees. The prism has an altitude or height of 0.01mm and the prism structure 16 has an overall height of 0.06 mm. The prism pitch in this embodiment is 0.038mm. In the embodiment shown in Figure 3, the prism 38a has a prism or apex angle of 120 degrees and base angles *b₁* and *b₂* of 20 and 40 degrees. The prism has an altitude or height of 0.01 mm and the prism structure 16 has an overall height of 0.06 mm. The prism pitch in this embodiment is 0.039 mm. In some embodiments, with light entering the BL module 10 at one side of the light guide 14, the prisms 38a,b,c,d are asymmetrically shaped with a base *b* and two sides *s₁*, *s₂*. The prisms 38a,b,c,d are positioned with the longer side *s₁* facing generally towards the side of the light guide 14 at which light enters from the light source.

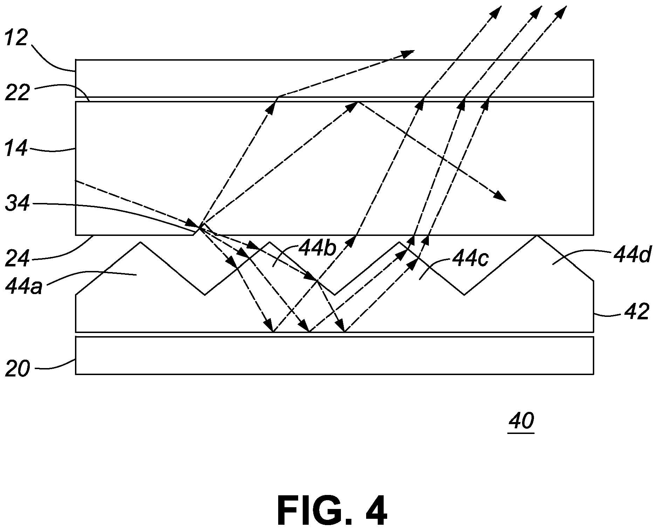

Figure 4 illustrates a backlight module 40 according to another embodiment of the present disclosure. The BL module 40 includes a diffuser 12, a light guide 14 and a reflector 20 as described above. The BL module 40 includes a prism structure 42 similar to the prism structure 16 described above, which is configured with one or more prisms 44a,b,c,d in a top portion of the prism structure 42. In this embodiment, apexes of some of the prisms 44a,b,c,d, as illustrated for prism 44d, contact the bottom surface 24 of the light guide 14 to separate the bottom surface 24 of the light guide 14 and prisms 44a,b,c in the prism structure 42. In one embodiment, the separation between the light guide 14 and prism structure 42 comprises an air gap. In another embodiment, one or more spacer elements (not shown) may be provided in the BL module 40 to create a separation between the bottom surface 24 of the light guide 14 and prisms in a prism structure. The spacers may be provided at outer edges of the prism structure.

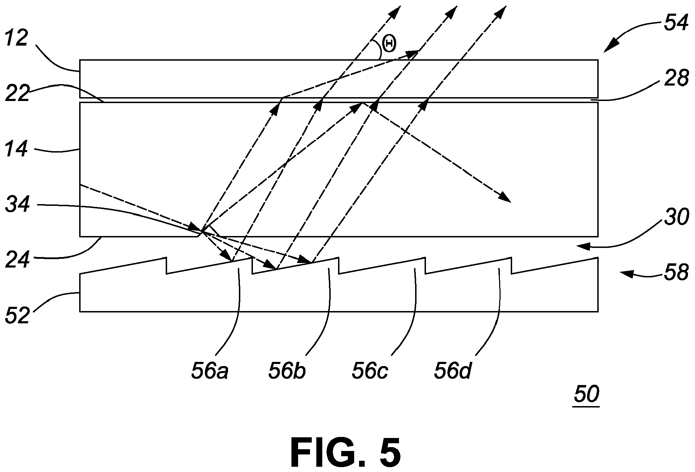

Figure 5 illustrates a backlight module 50 according to an example not according to the invention. The BL module 50 is comprised of a number of layers or planar structures. In one example, the BL module includes a diffuser 12 and a light guide 14, as described above, and a prism reflector 52. The diffuser 12, the light guide 14 and the prism reflector 52 typically comprise planar structures, cross-sections of which are represented in Figure 5. The prism reflector 52 is positioned below the bottom surface 24 of the light guide 14.

The BL module 50 may include a frame, tape and other mechanical and electrical components (not shown) for assembling, mounting and connecting the BL module 50 to a circuit board or frame of an electronic device. The BL module 50 typically is located below a liquid crystal display (LCD) or other display elements (not shown) such that light emitted from the top 54 of the BL module 50 illuminates the display.

The prism reflector 52 comprises a reflector including one or more prisms 56a,b,c,d integrated or constructed in a top portion of the prism reflector 52. The prisms 56a,b,c,d extend upwardly towards the light guide 14. The prisms 56a,b,c,d may be formed in the reflector by creating depressions, notches or holes in the reflector. In one example, the prisms 56a,b,c,d comprise strips or channels across at least a portion of a planar prism reflector 52. In other examples, the reflector 52 includes other shapes (not shown) configured to change and redirect the angles of light entering the bottom of the light guide 14, such as rectangular or cylindrical channels, a pattern of spherical or triangular structures, or an irregular arrangement of such structures. In some examples, an air gap is provided between the light guide 14 and the prism reflector 52 or between the light guide 14 and at least a portion of the prism reflector 52. Light is refracted as it travels through the interface 58 between the light guide 14 and the air gap, and then again as it is reflected and travels between the air gap and the interface 58 toward the top 54 of the BL module 50.

A layer of reflective material is placed on the top surfaces of the prisms 56a,b,c,d to reflect or redirect light emitted from the bottom of the light guide 14 back towards the light guide 14 and to the top of the backlight module 10. The reflective material may comprise a multi-layer plastic with a reflective film such as the 3M™ Enhanced Specular Reflector (ESR); a metal coating such as silver or aluminium on a polyethylene terephthalate (PET) substrate; or a white material such as TiO2 (titanium dioxide) or BaSO4 (barium sulfate), or other suitable material having a high refractive index.

As described above, as light enters and travels through the light guide 14, light is also emitted or escapes from the bottom surface 24 of the light guide 14. Light incident at the interface 30 between the light guide 14 and a bottom portion 58 of the backlight module 50 may be refracted and emitted from the bottom surface 24 of the light guide 14 or may be reflected within the light guide 14. The prism reflector 52 is configured to change the angle of light as it is reflected and passes back through the light guide 14 in order to affect or control the angle of light *θ* emitted from the top 54 of the BL module 50. In one example, the prism reflector 52 is configured to increase the amount of light emitted from the top 54 of the BL module 50 at angles between 55 to 125 degrees, relative to a top surface of the BL module 50, in order to increase the brightness of a display element located above the BL module 50. By changing the angle of light re-entering the light guide 14 from the prism reflector 52, the amount of reflection and total internal reflection between the bottom surface 24 of the light guide 14 and the prism reflector 52 is reduced. The sizes, angles and configurations of the prisms 56a,b,c,d may be varied depending on a number of factors including but not limited to the indexes of refraction of the light guide 14 and any material or substance between the light guide 14 and the prism reflector 52, as well as the properties of the reflective material of the prism reflector 52, the material and configuration of the light guide 14, and the pattern of extraction points or elements 34 in the light guide 14.

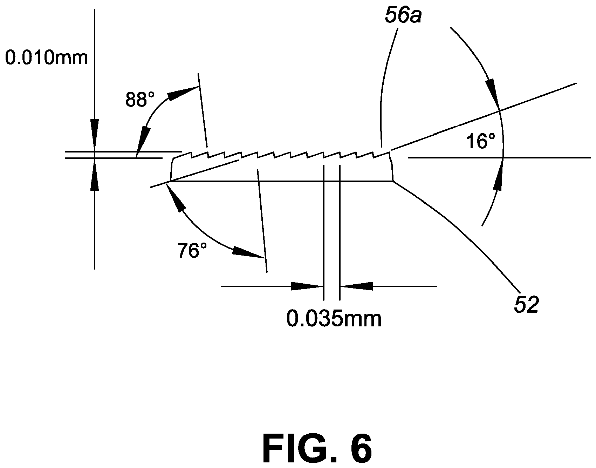

As illustrated in Figures 5 and 6, the bases of the prisms 56a,b,c,d may be triangular and may be asymmetrically shaped such as oblique or scalene triangles. In some examples, the apex angle a of the prism may be larger than the base angles *b₁*, *b₂* and base angle *b₂* is at least two times larger than base angle *b₁*. The angles, pitch and spacing of the prisms 56a,b,c,d are configured depending on the reflective material of the prism reflector 52 and the distance between the prism reflector 52 and the light guide 14. In the example shown in Figure 6, the prism 56a has a prism or apex angle of 76 degrees and base angles *b₁* and *b₂* of 16 degrees and 88 degrees. The prism has an altitude or height of 0.01 mm and the prism reflector 72 has an overall height of 0.06 mm. The prism pitch in this embodiment is 0.035 mm.

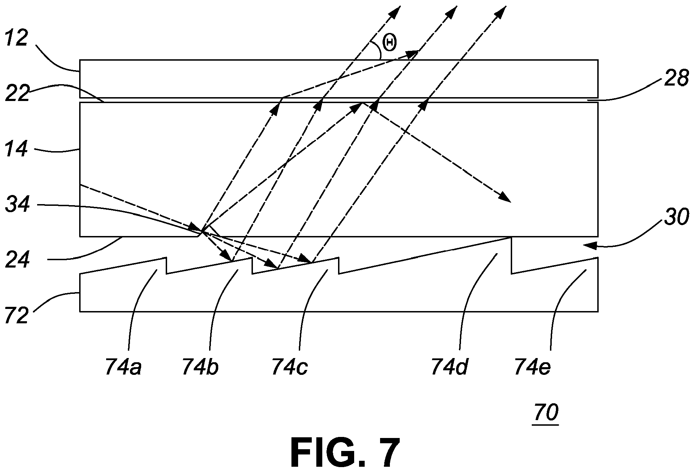

Figure 7 illustrates a BL module 70 according to another example not according to the invention. The BL module 70 includes a diffuser 12 and a light guide 14 as described above. The BL module 70 includes a prism reflector 72, similar to the prism reflector 52 described above, which is configured with one or more prisms 74a,b,c,d,e in a top portion of the prism reflector 72. In this example, apexes of some of the prisms 74a,b,c,d,e, as illustrated for prism 74d, contact the bottom surface 24 of the light guide 14 to separate the bottom surface 24 of the light guide 14 and prisms 74a,b,c,d in the prism reflector 72. In one example, the separation between the light guide 14 and prism reflector 72 comprises an air gap. In another example, one or more spacer elements (not shown) may be provided in the BL module 70 to create a separation between the bottom surface 24 of the light guide 14 and prisms 74.

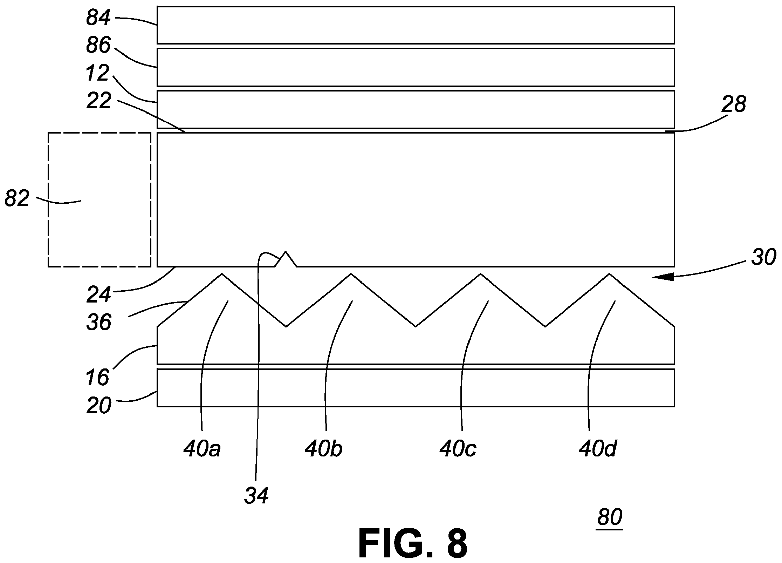

Figure 8 illustrates a backlight module 80 according to further embodiments of the present disclosure. The BL module 80 includes the diffuser 12, the light guide 14, the prism structure 16 and the reflector 20. The top surface 22 of the light guide 14 is adjacent the diffuser 12. The prism structure 16 is positioned between the bottom surface 24 of the light guide 14 and the reflector 20. In some embodiments, one or more light sources 82 may be provided adjacent the BL module 80. In some embodiments, the BL module 80 includes one or more light sources 82 adjacent a side of the light guide 14 to provide an edge-lit display. The light source 82 may be light emitting diodes (LEDs), fluorescent lamps such as cold cathode fluorescent lamps (CCFLs), incandescent bulbs, or any other suitable light source. In one embodiment, the BL module 80 includes at least one brightness enhancement film (BEF). The BEF may include prism patterns to refract light to direct more usable light towards a user viewing a display element. In the embodiment illustrated in Figure 8, the BL module 80 includes two brightness enhancement films including a top BEF 82 and a bottom BEF 84. The top BEF 82 and bottom BEF 84 may be crossed at 90 degrees to each other. In some embodiments, the BL modules according to the present disclosure increase the performance of BEFs by controlling the angles of light emitted from the diffuser 12 and thus decreasing the recycling of light by the BEF.

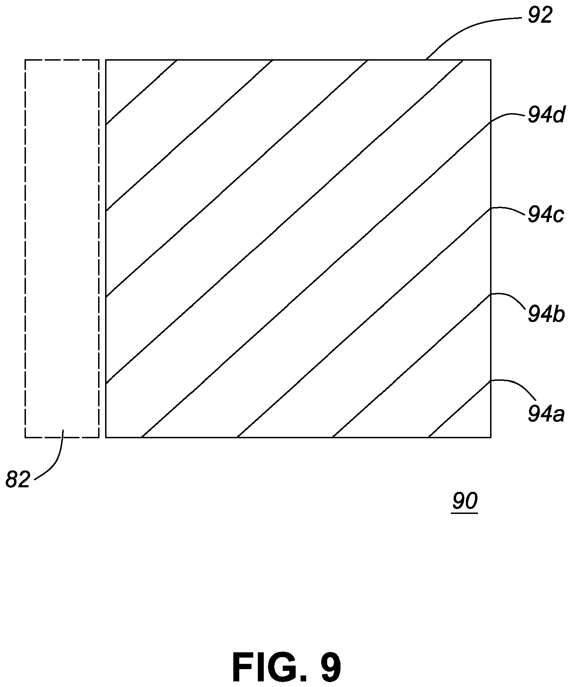

Figure 9 illustrates a portion of a backlight module 90 according to further embodiments of the present disclosure. Figure 9 provides a top view of a light source 82 and a prism structure 92. The prism structure 92 comprises a plurality of prisms 94a,b,c,d in a top portion of the structure 92 which extend upwardly towards the light guide 14. In one embodiment, the prisms 94a,b,c,d comprise strips or channels across at least a portion of the planar prism structure 92 which are arranged at oblique angles across the prism structure 92, rather than strips or channels arranged parallel or at right angles to the edges of the prism structure 92. When prisms 94a,b,c,d are provided at an oblique angle, optical interference and Moire effects may be reduced. The prisms 94a,b,c,d also may be provided with irregular sizes, non-uniform spacing or with a combination of irregular sizes and non-uniform spacing in order to reduce optical interference and Moire effects. In other embodiments, the structure 92 includes other shapes (not shown) configured to change and redirect the angles of light entering the bottom of the light guide 14, such as rectangular or cylindrical channels configured at oblique angles relative to the edge of the prism structure 92. In another embodiment (not shown), a plurality of prisms is configured in a prism reflector as described above, with the plurality of prisms comprising strips or channels across at least a portion of the prism reflector which are arranged at oblique angles across the prism reflector, rather than strips or channels arranged parallel or at right angles to the edges of the prism reflector. The plurality of prisms also may be provided with irregular sizes, non-uniform spacing or with a combination of irregular sizes and non-uniform spacing in order to reduce optical interference and Moire effects.

It will be appreciated that other BL modules according to embodiments of the present invention may be provided by incorporating a light source 82, one or more BEFs 84, 86, or both a light source 82 and one or more BEFs 84, 86, with the diffuser 12, light guide 14, and prism structures 16, 42 and reflector 20, as described above and illustrated in Figures 1 to 4.

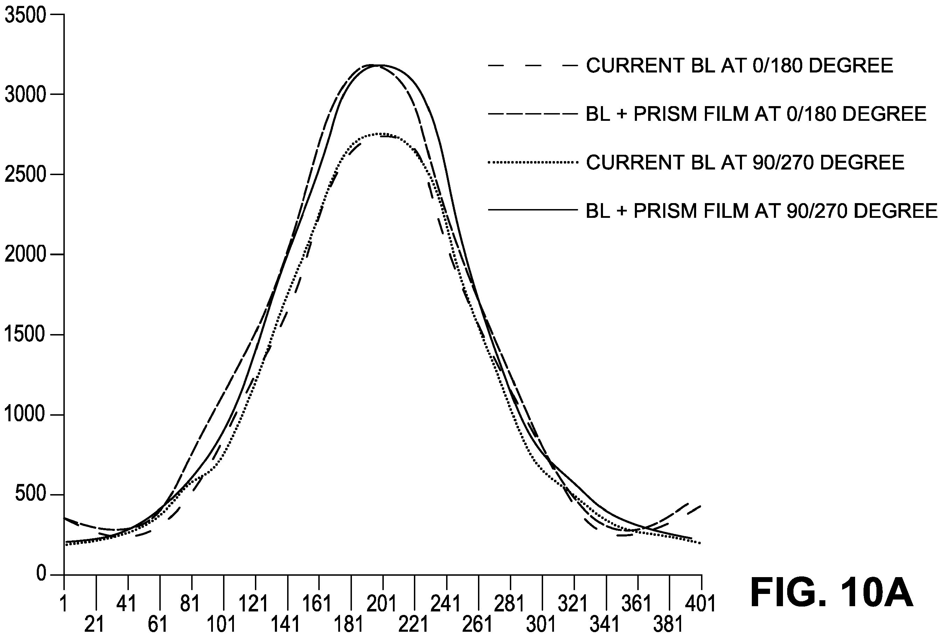

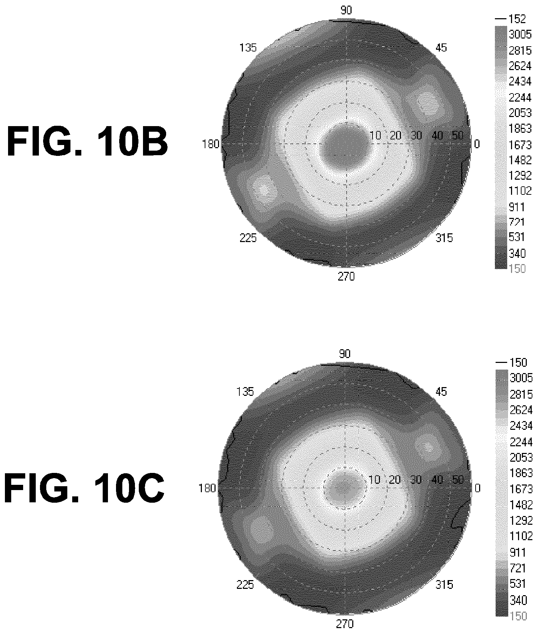

Figures 10(a), (b) and (c) illustrate sample luminance and test results for a backlight module according to embodiments of the present disclosure. Figure 10(a) illustrates a sample brightness distribution diagram when light is incident on a backlight module 10 according to an example embodiment. The solid lines in Figure 10(a) represents luminance of a conventional backlight module and the dotted lines generally above the solid lines represent luminance of a backlight module 10. In some embodiments, luminance may be increased by about 15% with a backlight module according to the present disclosure.

Figures 10 (b) and (c) illustrate, respectively, conoscopic plots for a backlight module 10 according to an example embodiment and for a conventional backlight module. In some embodiments, luminance may be increased by about 15% with a backlight module according to the present disclosure.

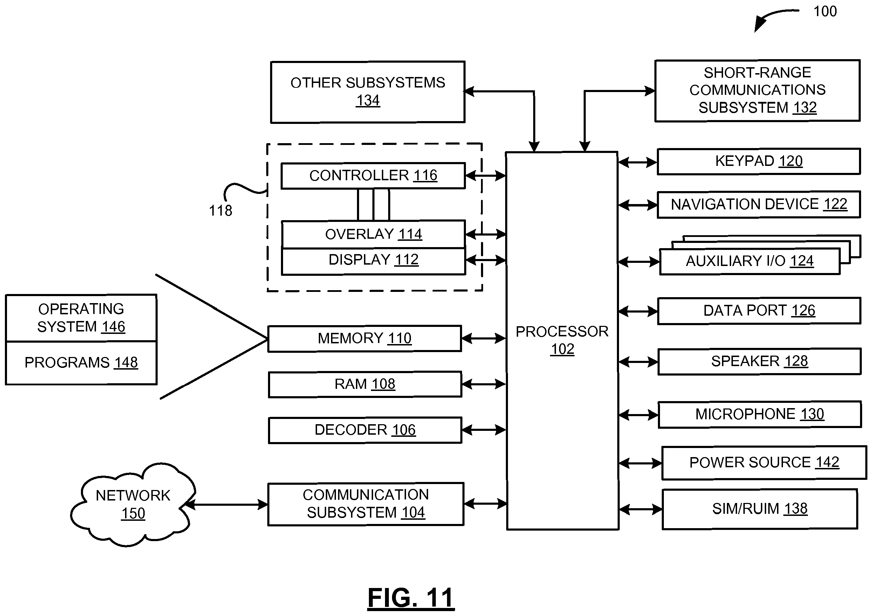

Reference is made to Figure 11, which illustrates in block diagram form, an electronic device 100 to which example embodiments described in the present disclosure can be applied. The electronic device 100 includes multiple components, such as a processor 102 that controls the overall operation of the electronic device 100. Communication functions, including data and voice communications, are performed through a communication subsystem 104. Data received by the electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the electronic device 100.

The processor 102 interacts with other components, such as Random Access Memory (RAM) 108, memory 110, a display 112 (such as a liquid crystal display (LCD)) with a touch-sensitive overlay 114 coupled to an electronic controller 116 that together comprise a touch-sensitive display 118, one or more keys or buttons or a keypad 120, a navigation device 122, one or more auxiliary input/output (I/O) subsystems 124, a data port 126, a speaker 128, a microphone 130, short-range communications subsystem 132, and other device subsystems 134. To identify a subscriber for network access, the electronic device 100 uses a Subscriber Identity Module or a Removable User Identity Module (SIM/RUIM) card 138 for communication with a network, such as the wireless network 150. Alternatively, user identification information may be programmed into memory 110.

The auxiliary I/O subsystems 124 could include other input devices such as one or more control keys, a keyboard or keypad, navigational tool (input device), or both. The navigational tool may be a depressible (or clickable) joystick such as a depressible optical joystick, a depressible trackball, a depressible scroll wheel, or a depressible touch-sensitive trackpad or touchpad. The other input devices could be included in addition to, or instead of, the touch-sensitive display 118, depending on the embodiment.

It will be appreciated that the electronic controller 116 of the touch-sensitive display 118 need not be physically integrated with the touch-sensitive overlay 114 and display 112. User-interaction with a graphical user interface (GUI) is performed through the touch-sensitive overlay 114. The GUI displays user interface screens on the touch-sensitive display 118 for displaying information or providing a touch-sensitive onscreen user interface element for receiving input. This content of the user interface screen varies depending on the device state and active application, among other factors. Some user interface screens may include a text field sometimes called a text input field. The processor 102 interacts with the touch-sensitive overlay 114 via the electronic controller 116. Information, such as text, characters, symbols, images, icons, and other items that may be displayed or rendered on a mobile device, is displayed on the touch-sensitive display 118 via the processor 102.

One or more backlight modules and light sources (not shown) may provide backlighting or illumination to the display 112, buttons or keypad 120, navigation device 122, other input devices, the device bezel, apertures, or any combination thereof. In some example embodiments, the one or more backlight modules and light sources may be controlled by a controller, such as the electronic controller 116, or by the processor 102 to adjust the intensity, colour, lighting effect, or any other attribute of the light provided by the backlight modules and light sources.

The electronic device 100 includes an operating system 146 and software programs or components 148 that are executed by the processor 102 and are typically stored in a persistent, updatable store such as the memory 110. Additional applications or programs may be loaded onto the electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the electronic device 100 is similar. The speaker 128 outputs audible information converted from electrical signals, and the microphone 130 converts audible information into electrical signals for processing.

While the embodiments described herein are directed to particular implementations of light guide apparatuses, it will be understood that modifications and variations may occur to those skilled in the art having read the present disclosure.

## Claims

1. A backlight module (10, 40, 50, 70, 80, 90) comprising:
a diffuser (12);
a light guide (14) having a top surface (22) and a bottom surface (24), the light guide top surface (22) being adjacent the diffuser (12);
a reflector (20, 52, 72); and
a prism structure (16, 42, 52, 72, 92) positioned between the light guide bottom surface (24) and the reflector (20, 52, 72), the prism structure (16, 42, 52, 72, 92) having a plurality of prisms (44, 56, 74, 94) extending towards the light guide (14), wherein the prisms (44, 56, 74, 94) are triangular prisms (44, 56, 74, 94)
**characterised in that** the prisms are asymmetrically shaped, wherein at least one of the plurality of prisms (56, 74) has an apex angle larger than first and second base angles (b1, b2) of the prism and wherein the second base angle (b2) is 1.5 to 4 time larger than the first base angle (b1).

2. The backlight module of claim 1 wherein the prism structure comprises a film, a top portion of the film including the plurality of prisms.

3. The backlight module of claim 1 wherein the prism structure is integrated into a top portion of the reflector (52, 72).

4. The backlight module of any one of claims 1 to 3 further comprising an air gap between at least some regions of a top surface (22) of the prism structure (16, 42, 52, 72, 92) and the light guide bottom surface (24).

5. The backlight module of claim 4 wherein apexes of some of the prisms (74d) contact the light guide bottom surface (24) and apexes of some of the prisms (74a, 74b, 74c, 74e) are spaced apart from the light guide bottom surface (24).

6. The backlight module of any one of claims 1 to 5, further comprising at least one brightness enhancement film (84, 86).

7. The backlight module of any one of claims 1 to 6 wherein the plurality of prisms (94) comprise channels, across at least a portion of the prism structure (92), which are arranged at oblique angles to edges of the prism structure (92).

8. The backlight module of any one of claims 1 to 7 further comprising at least one light source (82) arranged to supply light to the light guide (14), wherein the prism structure (16, 42, 52, 72, 92) is configured to change the angle of light reflected by the reflector (20, 52, 72) to control the angle of light emitted from the top surface (22) of the light guide (14).

9. The backlight module of any one of claims 1 to 8 further comprising the prism structure (16, 42, 52, 72, 92) having at least one spacer separating a top of the prism structure (16, 42, 52, 72, 92) from the bottom surface (24) of the light guide (14).

10. An electronic device (100) comprising a backlight module (10, 40, 50, 70, 80, 90) according to any one of claims 1 to 9 and a light source (82) arranged to supply light to the light guide (14) of the backlight module (10, 40, 50, 70, 80, 90).

11. The electronic device (100) of claim 10 further comprising a display (112) or a keypad (120), wherein the backlight module (10, 40, 50, 70, 80, 90) and light source (82) provide backlighting for the display (112) or for the keypad (120).

## Patentansprüche

1. Rückbeleuchtungsmodul (10, 40, 50, 70, 80, 90), umfassend:
einen Diffusor (12);
einen Lichtleiter (14) mit einer oberen Oberfläche (22) und einer unteren Oberfläche (24), wobei die obere Oberfläche (22) des Lichtleiters dem Diffusor (12) benachbart ist;
einen Reflektor (20, 52, 72); und
eine Prismastruktur (16, 42, 52, 72, 92), die zwischen der unteren Oberfläche (24) des Lichtleiters und dem Reflektor (20, 52, 72) angeordnet ist, wobei die Prismastruktur (16, 42, 52, 72, 92) mehrere Prismen (44, 56, 74, 94) aufweist, die zum Lichtleiter (14) hin verlaufen, wobei die Prismen (44, 56, 74, 94) dreieckige Prismen (44, 56, 74, 94) sind, **dadurch gekennzeichnet, dass** die Prismen asymmetrisch geformt sind, wobei zumindest eines der mehreren Prismen (56, 74) einen Scheitelwinkel aufweist, der größer als erste und zweite Basiswinkel (b1, b2) des Prismas ist, und wobei der zweite Basiswinkel (b2) 1,5 bis 4 Mal größer als der erste Basiswinkel (b1) ist.

2. Rückbeleuchtungsmodul nach Anspruch 1, wobei die Prismastruktur eine Folie umfasst, wobei ein oberer Abschnitt der Folie die mehreren Prismen enthält.

3. Rückbeleuchtungsmodul nach Anspruch 1, wobei die Prismastruktur in einen oberen Abschnitt des Reflektors (52, 72) integriert ist.

4. Rückbeleuchtungsstruktur nach einem der Ansprüche 1 bis 3, ferner umfassend einen Luftspalt zwischen zumindest einigen Regionen der oberen Oberfläche (22) der Prismastruktur (16, 42, 52, 72, 92) und der unteren Oberfläche (24) des Lichtleiters.

5. Rückbeleuchtungsmodul nach Anspruch 4, wobei Scheitel von einigen der Prismen (74d) die untere Oberfläche (24) des Lichtleiters berühren und Scheitel von einigen der Prismen (74a, 74b, 74c, 74e) zur unteren Oberfläche (24) des Lichtleiters beabstandet sind.

6. Rückbeleuchtungsmodul nach einem der Ansprüche 1 bis 5, ferner umfassend zumindest eine Helligkeitsverbesserungsfolie (84, 86).

7. Rückbeleuchtungsmodul nach einem der Ansprüche 1 bis 6, wobei die mehreren Prismen (94) Kanäle über zumindest einen Abschnitt der Prismastruktur (92) umfassen, die in schiefen Winkeln zu den Kanten der Prismastruktur (92) angeordnet sind.

8. Rückbeleuchtungsmodul nach einem der Ansprüche 1 bis 7, ferner umfassend zumindest eine Lichtquelle (82), die zum Zuführen von Licht zum Lichtleiter (14) angeordnet ist, wobei die Prismastruktur (16, 42, 52, 72, 92) zum Ändern des Winkels von Licht, das durch den Reflektor (20, 52, 72) reflektiert wird, zum Steuern des Winkels von Licht, das von der oberen Oberfläche (22) des Lichtleiters (14) ausgesendet wird, konfiguriert ist.

9. Rückbeleuchtungsmodul nach einem der Ansprüche 1 bis 8, ferner umfassend die Prismastruktur (16, 42, 52, 72, 92), die zumindest ein Distanzstück aufweist, welches eine Oberseite der Prismastruktur (16, 42, 52, 72, 92) von der unteren Oberfläche (24) des Lichtleiters (14) trennt.

10. Elektronische Vorrichtung (100), umfassend ein Rückbeleuchtungsmodul (10, 40, 50, 70, 80, 90) nach einem der Ansprüche 1 bis 9 und eine Lichtquelle (82), die zum Zuführen von Licht zum Lichtleiter (14) des Rückbeleuchtungsmoduls (10, 40, 50, 70, 80, 90) angeordnet ist.

11. Elektronische Vorrichtung (100) nach Anspruch 10, ferner umfassend eine Anzeige (112) oder ein Tastenfeld (120), wobei das Rückbeleuchtungsmodul (10, 40, 50, 70, 80, 90) und die Lichtquelle (82) eine Rückbeleuchtung für die Anzeige (112) oder für das Tastenfeld (120) vorsehen.

## Revendications

1. Module de rétroéclairage (10, 40, 50, 70, 80, 90) comprenant :
un diffuseur (12) ;
un guide de lumière (14) ayant une surface de sommet (22) et une surface de base (24), la surface de sommet de guide de lumière (22) étant adjacente au diffuseur (12) ;
un réflecteur (20, 52, 72) ; et
une structure de prisme (16, 42, 52, 72, 92) positionnée entre la surface de base de guide de lumière (24) et le réflecteur (20, 52, 72), la structure de prisme (16, 42, 52, 72, 92) ayant une pluralité de prismes (44, 56, 74, 94) s'étendant dans la direction du guide de lumière (14), dans lequel les prismes (44, 56, 74, 94) sont des prismes triangulaires (44, 56, 74, 94), **caractérisé en ce que** les prismes sont de formes asymétriques, dans lequel au moins un de la pluralité de prismes (56, 74) possède un angle d'apex plus grand que le premier et le deuxièmes angles de base (b1, b2) du prisme et dans lequel le deuxième angle de base (b2) est 1.5 à 4 fois plus grand que le premier angle de base (b1).

2. Module de rétroéclairage selon la revendication 1, dans lequel la structure de prisme comprend un film, une portion de sommet du film incluant la pluralité de prismes.

3. Module de rétroéclairage selon la revendication 1, dans lequel la structure de prisme est intégrée dans une portion de sommet du réflecteur (52, 72).

4. Module de rétroéclairage selon une quelconque des revendications 1 à 3, comprenant en outre un entrefer entre au moins certaines régions d'une surface de sommet (22) de la structure de prisme (16, 42, 52, 72, 92) et la surface de base du guide de lumière (24).

5. Module de rétroéclairage selon la revendication 4, dans lequel les apexes de certains des prismes (74d) contactent la surface de base de guide de lumière (24) et les apexes de certains des prismes (74a, 74b, 74c, 74e) sont espacés de la surface de base de guide de lumière (24).

6. Module de rétroéclairage selon une quelconque des revendications 1 à 5, comprenant en outre au moins un film d'amélioration de brillance (84, 86).

7. Module de rétroéclairage selon une quelconque des revendications 1 à 6, dans lequel la pluralité de prismes (94) comprennent des canaux, au travers d'au moins une partie de la structure de prisme (92), qui sont disposés à des angles obliques par rapport aux bords de la structure de prisme (92).

8. Module de rétroéclairage selon une quelconque des revendications 1 à 7, comprenant en outre au moins une source de lumière (82) agencée pour fournir de la lumière au guide de lumière (14), dans lequel la structure de prisme (16, 42, 52, 72, 92) est configurée pour modifier l'angle de lumière réfléchi par le réflecteur (20, 52, 72) pour contrôler l'angle de lumière émis à partir de la surface de lumière (22) du guide de lumière (14).

9. Module de rétroéclairage selon une quelconque des revendications 1 à 8, comprenant en outre la structure de prisme (16, 42, 52, 72, 92) ayant au moins un écarteur séparant un sommet de la structure de prisme (16, 42, 52, 72, 92) à partir de la surface de base (24) du guide de lumière (14).

10. Dispositif électronique (100) comprenant un module de rétroéclairage (10, 40, 50, 70, 80, 90) selon une quelconque des revendications 1 à 9 et une source de lumière (82) agencée pour fournir de la lumière au guide de lumière (14) du module de rétroéclairage (10, 40, 50, 70, 80, 90).

11. Dispositif électronique (100) selon la revendication 10, comprenant en outre un écran (112) ou un clavier (120), dans lequel le module de rétroéclairage (10, 40, 50, 70, 90, 90) et une source de lumière (82) fournissent un rétroéclairage pour l'écran (112) ou pour le clavier (120).
